# EUROPEAN PATENT SPECIFICATION

(11) **EP 0 671 970 B1**
(45) Date of publication and mention of the grant of the patent: **13.05.1998**
(21) Application number: 94902158.8
(22) Date of filing: 02.12.1993
(51) Int. Cl.: B01D 43/00, C02F 11/12

(54) **A DEVICE FOR TRANSPORT AND DEWATERING OF SCREENING OR SLUDGE MATERIAL**
VORRICHTUNG ZUM TRANSPORT UND ENTWÄSSERN VON FILTER- ODER SCHLAMM-MATERIAL
DISPOSITIF DE TRANSPORT ET DE DESHUMIDIFICATION DE RESIDUS DE FILTRAGE OU DE BOUES

(30) Priority: 02.12.1992 SE 9203620
(43) Date of publication of application: 20.09.1995
(73) Proprietor: PICATECH AG, 6010 Kriens (CH)
(72) Inventor: WALLANDER, Carl, Otto, S-421 33 Västra Frölunda (SE)
(74) Representative: Werffeli, Heinz R., Dipl.-Ing.ETH.
(86) International application number: SE9301037
(87) International publication number: WO9412263

(56) References cited:
- DD-A- 129 739
- DE-A- 1 461 417
- US-A- 4 260 488
- US-A- 4 913 771
- Dialog Information Services, File 350, World Patent Index 63-80, Dialog Accession No. 002268176, WPI Accession No. 79-67384B/37, BAKU WATER SUPPL CO: "Conical Screw Filter Press - has Screw Blades Between Grooved Housing and Central Perforated Vacuum Cylinder for Better Filtrate Offtake"; & SU,A,636013, 10-12-78, 7937 (Basic).
- Dialog Information Services, File 351, World Patent Index 81-94, Dialog Accession No. 004529841, WPI Accession No. 86-033185/05, YAMATO SANGYO KK: "Screw Press Sludge Dewaterer in which Filtering Cylinder is Placed in Vacuum Chamber to Reduce Pressure"; & JP,A,60 255 300, 16-12-85, 8605 (Basic).

## Description

### TECHNICAL AREA

The present invention refers to a device for transport and dewatering of liquid-containing screening or sludge material, including an evacuation chamber connected with evacuating means and formed by walls, with an inlet for the material to be dewatered, and with means for continuously compression and separation of liquid from the screening respective sludge material, acting towards an outlet opening, for evacuation of incoming material without equalization of air pressure.

### BACKGROUND OF THE INVENTION

In purifying plants, the screening material is separated from the sewage during the cleaning process. The screening material that is separated from the sewage by different screening filters is transported with conveyors to an assembly point and has normally a dryness of approximately 5 to 15 percent. Through compression of the screening material the dryness can be increased. It is desirable to achieve as high dryness as possible, since the screening material is transported away either for deposition or to a combustion station. The freight costs and the energy consumption by the combustion is reduced my means of a higher dryness. However, the dewatering of the screening material is difficult to achieve in an economically advantageous way.

Conveyors and means for dewatering screening material are difficult and expensive to produce and need regular maintenance, which work usually is considerated as dirty and awkward.

Vacuum conveyors have been used for a long time for pneumatic transport of goods, preferably particle-formed goods. In general, they work intermittently with a filing phase and an emptying phase. They are therefore not suited for continuous operation in sewage-treatment plants.

### THE TECHNICAL PROBLEM

One purpose with the present invention is to achieve a simple and efficient device for transport and dewatering of screening or sludge material, which device enables a closed transport of such material along a considerable distance, without mechanical devices requiring regular maintenance.

### THE SOLUTION

For this purpose the device according to the invention is characterized in, that the inlet opens directly into the evacuation chamber and includes a pipeline with a valve for recurrent intake of a quantity of screening respective sludge material into the pipeline and for a direct or gradual transport of said quantity of material along this pipeline and into the evacuation chamber under preservation of a negative pressure in this chamber and at the inlet.

### DESCRIPTION OF THE DRAWINGS

The invention will be described hereinafter with reference to an embodiment that is shown in the enclosed drawings, wherein:
Fig. 1 is a plane view of a dewatering device according to the invention,
Fig. 2 shows the device in Fig. 1 in a side view, and
Fig. 3-5 show an intake guide plate that is part of the device in three different views.

### DESCRIPTION OF EMBODIMENT

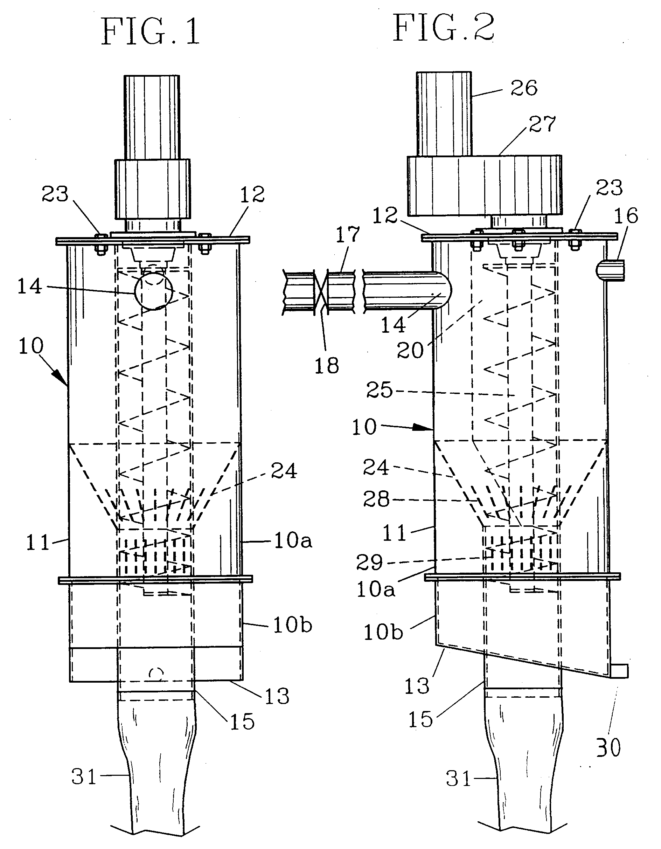

The dewatering device shown in Fig. 1 and 2 includes a generally cylindrical chamber 10, whose outside wall 11 is divided into one bigger and one smaller section 10a und 10b respectively. The chamber is provided with end-walls 12,13 and an inlet 14 that is radially directed against the upper part of the chamber, in relation to the longitudinal direction of the chamber. An axially directed outlet 15 is placed in the end-wall 13.

The chamber 10 is connected to a not shown vacuum suction pump via a connection piece 16. The vacuum suction pump maintains an appropriate negative pressure in the chamber by means of a pressure control. The negative pressure is transmitted via a pipeline 17 which is connected to the inlet 14, which pipeline contains a valve 18 that can be opened. The pipeline orifice, not shown in the drawings, can reach a screening filter where sediments are taken up and dumped in a gathering trough, whereby the orifice can be located near the bottom of said trough, and in such a way that the orifice always is covered with a layer of screening material. By opening the valve 18 for a short moment and then closing it again, a determined quantity of screening material can be drawn into the pipeline via the mouthpiece. This procedure is continuously repeated with regular intervals, so that screening material gradually is transported through the pipeline 17 to the chamber 10. If the pipeline in the main runs horizontally, can it reach several hundred meters without the need of a high negative pressure.

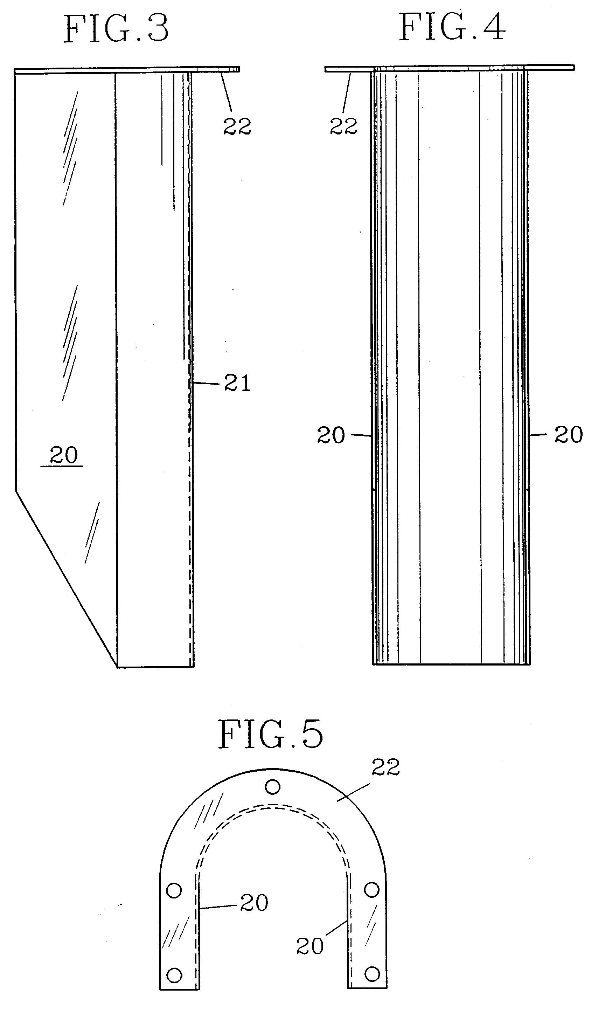

When the screening material reaches the chamber 10, which can be vertically mounted as in Fig. 1 and 2, or with a certain inclination to the horizontal plane, the screening material is caught by an intake guide plate 20, 21 that is shown separately in Fig. 3-5. The sheet 20-21 has an U-shaped cross section and is provided with two generally parallel sides 20, and a centre portion 21 formed as a semicircle that connects both sides. A flange 22 at one end of the intake guide plate, forms a hold for mounting to the end-wall 12 by means of the screws 23. The outer edges of the sides of the plate lie loosely against the inner casing surface of the chamber, so that screening material can not pass into the remaining parts of the chamber. By the same reason the short sides opposite to the flange 22 are obliquely chamfered, for connection to a conic funnel 24, which in its turn connects with its periphery edge to the inside of the wall 11. The funnel 24 is truncated and connects with its inner edge to an extension of the outlet 15 that is directed into the chamber 10.

A transport screw 25 is rotatable arranged centrally in the chamber 10 and is driven by a motor 26 via a transmission 27. By the rotation of the screw 25 the screening material is pressed downward into the funnel 24 during simultaneous compression and dewatering. The liquid is thereby drained through slits 28, 29 in the funnel 24 and in the outlet 15 respectively.

The lower part of the chamber 10 forms a ring-shaped room for gathering liquid. A connection piece 30 provided with a non-return valve enables liquid pumping from said room by means of a not shown pump, e.g. a piston pump. Alternatively water can leave when the pressure is as its lowest in the chamber, i.e. precisely after a completed feeding cycle.

The outlet 15 is provided with an elastic tube section 31, which section forms an opening whose cross section can be varied, so that it closes and thereby contributes to retain the negative pressure in the chamber 10, but yet allows passage of relative big lumps of compressed screening material. At the same time as compressed screening material is pressed out through the tube section 31, liquid is sucked back into the tube section 15 by the negative pressure, so that the dewatering becomes very efficient.

The degree of dewatering depends on how high the negative pressure is in the chamber 10, on the opening frequency of the valve 18 and on the speed of rotation of the screw 25.

The device described above works with simple mechanical components, which are not expensive and do not require any extensive service and which can be readily exchanged at any breakdown. As the dewatering occurs in a closed system, the dewatering is not dependent on the surrounding temperature and weather. Besides, less odour is admitted to the surrounding than with a conventional system for gathering and dewatering of screening material.

The invention is not limited to the above described embodiment. For instance the chamber 10 can be designed differently than shown. The transport screw 25 can also be replaced by a piston press.

## Claims

1. A device for transport and dewatering of liquid-containing screening or sludge material including an evacuation chamber (10) connected with evacuating means and formed by walls (11-13), with an inlet (14) for the material to be dewatered, and with means (24,25) for continuously compression and separation of liquid from the screening respective sludge material, acting towards an outlet opening (15,31), for evacuation of incoming material without equalization of air pressure, characterized in, that the inlet (14) opens directly into the evacuation chamber (10) and includes a pipeline (17) with a valve (18) for recurrent intake of a quantity of screening respective sludge material by suction into the pipeline and for a direct or gradual transport of said quantity of material along this pipeline (17) and into the evacuation chamber (10) under preservation of a negative pressure in this chamber (10) and at the inlet (14).

2. A device according to claim 1,
**characterized in,**
that the chamber (10) has an oblong form with the pipeline inlet (14) connected to one end of the chamber, and the outlet opening (15, 31) connected to the other end, and that the compressing means include a transport- and compressing device (25) that presses the screening material or the sludge against the outlet opening (15, 31) and which is working in the longitudinal direction of the chamber.

3. A device according to claim 2,
**characterized in**,
that the transport- and compressing device consists of a screw (25) that extends axially into in a tube (15) that shows longitudinal slits (29) for drainage of liquid from the screening material/the sludge.

4. A device according to claim 2,
**characterized in**,
that the transport- and compressing device (25) consists of a piston press that extends axially into a tube (15) that is provided with longitudinal slits (29) for drainage of liquid from the screening material/the sludge.

5. A device according to claim 2,
**characterized in**,
that the chamber includes a space (10b) for gathering of liquid.

6. A device according to claim 1,
**characterized in**,
that the outlet opening includes an elastic tube section (31), which is mounted onto the opening (15) and extends a distance away from said opening.

## Patentansprüche

1. Vorrichtung zur Beförderung und Entwässern von Flüssigkeit enthaltendem Filter- oder Schlamm-Material, mit einer mit Evakuationsmitteln verbundenen und durch Wände (11-13) gebildeten Evakuationskammer (10), welche mit einem Einlass (14) für das zu entwässernde Material, und mit gegen eine Auslassöffnung (15,31) zu wirkenden Mitteln (24,25) zur kontinuierlichen Kompression und Abtrennung von Wasser aus dem Filter- bzw. Schlamm-Material, zur Evakution von eintretendem Material ohne Ausgleich des Luftdruckes, versehen ist, dadurch gekennzeichnet, dass der Einlass (14) direkt in die Evakuationskammer (10) mündet und mit einer mit einem Ventil (18) versehenen Rohrleitung (17) zur wiederkehrenden Zufuhr einer Filter- bzw. Schlamm-Materialmenge mittels Unterdruck in die Rohrleitung und für eine direkte oder schrittweise Beförderung dieser Materialmenge längs dieser Rohrleitung (17) und in die Evakuationskammer (10), unter Aufrechterhaltung eines Unterdruckes in dieser Kammer (10) und am Einlass (14), versehen ist.

2. Vorrichtung nach Anspruch 1, dadurch gekennzeichnet, dass die Kammer (10) eine längliche Form mit dem Rohreinlass (14) mit dem einen Ende der Kammer und der Auslassöffnung (15,31) mit dem anderen Ende verbunden, aufweist, und dass die Kompressionsmittel eine Förder- und Kompressionsvorrichtung (25) einschliessen, welche das Filter- oder Schlamm-Material gegen die Auslassöffnung (15,31) zu pressen und in der Längsrichtung der Kammer wirken.

3. Vorrichtung nach Anspruch 2, dadurch gekennzeichnet, dass die Förder- und Kompressionsvorrichtung aus einer Schraube (25) besteht, welche sich in achsialer Richtung in ein Rohr (15) erstreckt, welche zur Drainage von Flüssigkeit aus dem Filter- bzw. Schlamm-Material mit Längsschlitzen (29) versehen ist.

4. Vorrichtung nach Anspruch 3, dadurch gekennzeichnet, dass die Förder- und Kompressionsvorrichtung (25) aus einer Kolbenpresse besteht, welche sich in achsialer Richtung in ein Rohr (15) erstreckt, welche zur Drainage von Flüssigkeit aus dem Filter- bzw. Schlamm-Material mit Längsschlitzen (29) versehen ist.

5. Vorrichtung nach Anspruch 2, dadurch gekennzeichnet, dass die Kammer einen Hohlraum (10b) zum Sammeln von Flüssigkeit aufweist.

6. Vorrichtung nach Anspruch 1, dadurch gekennzeichnet, dass die Auslassöffnung einen auf der Öffnung (15) angeordneten elastischen Rohrabschnitt (31) aufweist, welcher sich von dieser Öffnung weg erstreckt.

## Revendications

1. Dispositif pour le transport et la déshydratation de matières de criblage ou de boues contenant du liquide, englobant une chambre d'évacuation (10) reliée a un moyen d'évacuation et formée par des parois (11-13), comprenant une entrée (14) pour la matière à déshydrater et des moyens (24, 25) pour comprimer et séparer en continu le liquide de la matière de criblage, respectivement de boues, agissant en direction d'une ouverture de sortie (15, 31) pour évacuer la matière entrante sans corriger la pression d'air, caractérisé en ce que l'entrée (14) s'ouvre directement dans la chambre d'évacuation (10) et englobe une canalisation (17) comprenant une vanne (18) pour prélever de manière récurrente une quantité de matières de criblage, respectivement de boues par aspiration dans la canalisation et pour le transport direct ou progressif de ladite quantité de matière le long de cette canalisation (17) et dans la chambre d'évacuation (10) en conservant une pression négative dans cette chambre (10) et à l'entrée (14).

2. Dispositif selon la revendication 1,
caractérisé en ce que
la chambre (10) possède une forme oblongue, l'entrée (14) de la canalisation étant reliée à une extrémité de la chambre et l'ouverture de sortie (15, 31) étant reliée à l'autre extrémité, et en ce que le moyen de compression englobe un dispositif de transport et de compression (25) qui comprime la matière de criblage ou la boue contre l'ouverture de sortie (15, 31) et qui travaille dans la direction longitudinale de la chambre.

3. Dispositif selon la revendication 2,
caractérisé en ce que
le dispositif de transport et de compression est constitué par une vis sans fin (25) qui s'étend en direction axiale dans un tube (15) qui présente des rentes longitudinales (29) pour le drainage du liquide hors de la matière de criblage/de la boue.

4. Dispositif selon la revendication 2,
caractérisé en ce que
le dispositif de transport et de compression (25) est constitué par une presse à piston qui s'étend en direction axiale dans un tube (15) qui est muni de fentes longitudinales (29) pour le drainage du liquide de la matière de criblage/de la boue.

5. Dispositif selon la revendication 2,
caractérisé en ce que
la chambre englobe un espace (10b) pour récolter le liquide.

6. Dispositif selon la revendication 1,
caractérisé en ce que
l'ouverture de sortie englobe une section de tube élastique (31) qui est montée sur l'ouverture (15) et qui s'étend sur une certaine distance à l'écart de ladite ouverture.
